# EUROPEAN PATENT APPLICATION

(11) **EP 3 061 911 A1**
(43) Date of publication of application: **31.08.2016**
(21) Application number: 16155996.8
(22) Date of filing: 16.02.2016
(51) Int. Cl.: F01D 5/18, F01D 9/06, F23R 3/00

(54) **ENGINE COMPONENT**

(30) Priority: 24.02.2015 US 201514629986
(71) Applicant: General Electric Company, Schenectady, NY 12345 (US)
(72) Inventor: BUNKER, Ronald Scott, West Chester, OH Ohio 45069 (US); BUCK, Frederick Alan, West Chester, OH Ohio 45069 (US)
(74) Representative: Williams, Andrew Richard

(57) **Abstract**

An engine component (80) for a gas turbine engine (10) includes a film-cooled substrate (82) having a hot surface (84) facing hot combustion gas and a cooling surface (86) facing a cooling fluid flow. The substrate (82) includes one or more film holes (90) that have a passage (96) with an inlet (92) and an outlet (94), where the passage (96) includes portions (98, 100) that are angled relative to each other.

## Description

### BACKGROUND

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, may be necessary. Some engine components include film holes that supply a thin layer or film of cooling fluid on a hot surface of the engine component to protect the engine component from hot combustion gas. Typically, cooling is accomplished by ducting cooler air from the high and/or low pressure compressors to the engine components which require film cooling. The cooling air from the compressor is about 500 °C to 700 °C. While the compressor air is a high temperature, it is cooler relative to the air that passes through the combustion chamber, which may be around 1000 °C to 2000 °C.

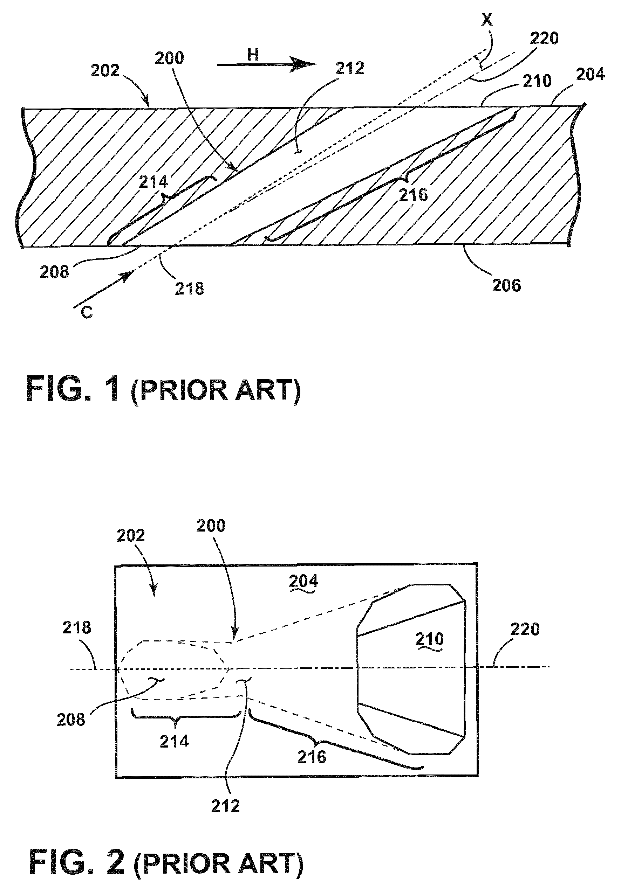

A prior art film hole 200 in an engine component 202 is shown in cross-section in FIG. 1. The engine component 202 includes a hot surface 204 facing a hot combustion gas flow H and a cooling surface 206 facing a cooling fluid flow C. During operation, the cooling fluid flow C is supplied out of the film hole 200 to create a thin layer or film of cool air on the hot surface 204, protecting it from the hot combustion gas flow H. The film hole 200 includes an inlet 208 provided on a cooling surface 206, an outlet 210 provided on the hot surface 204, and a passage 212 connecting the inlet 208 and the outlet 210. The passage 212 can include sections 214, 216 oriented at an angle to each other when viewed from a plane orthogonal to the hot and cooling surfaces 204, 206, i.e. in the cross-sectional view shown in FIG. 1. In the illustrated embodiment, the sections include a metering section 214 for metering of the mass flow rate of the cooling fluid flow C, and a diffusing section 216 in which the cooling fluid C may expand to form a wider cooling film.

The film hole 200 lies along a longitudinal axis of the passage 212, also referred to herein as the centerline 218, which passes through the geometric center of the cross-sectional area of the metering section 214. The diffusing section 216 can define its own centerline 220, which passes through the geometric center of the cross-sectional area of the diffusing section 216. The two centerlines 218, 220 intersect at an angle X when viewed from a plane orthogonal to the hot and cooling surfaces 204, 206, i.e. in the cross-sectional view shown in FIG. 1. When viewed from the hot surface 204, as shown in FIG. 2, the centerlines 218, 220 are collinear, such that there is no lateral change in the direction of cooling air flow C through the passage 212.

### BRIEF DESCRIPTION

In one aspect, the invention relates to an engine component for a gas turbine engine, the gas turbine engine generating hot combustion gas flow, having a substrate having a hot surface facing the hot combustion gas flow and a cooling surface facing a cooling fluid flow, and a film hole extending through the substrate and having an inlet provided on the cooling surface, an outlet provided on the hot surface, and a passage connecting the inlet and the outlet, wherein the passage comprises an inlet portion defining an inlet portion centerline and an outlet portion defining an outlet portion centerline, which forms a first angle relative to the inlet portion centerline such that the outlet portion centerline is non-collinear with the inlet portion centerline when viewed from the hot surface.

In another aspect, the invention relates to an engine component for a gas turbine engine, the gas turbine engine generating hot combustion gas flow, having a substrate having a hot surface facing the hot combustion gas flow and a cooling surface facing a cooling fluid flow, and a film hole extending through the substrate and having an inlet provided on the cooling surface, an outlet provided on the hot surface, and a passage connecting the inlet and the outlet, wherein the passage comprises a first portion defining a first centerline and a second portion, located downstream of the first portion relative to the direction of the cooling fluid flow through the passage, defining a second centerline, wherein the second centerline forms a first angle relative to the first centerline about an axis perpendicular to a plane defined by the hot surface.

In yet another aspect, the invention relates to an engine component for a gas turbine engine, the gas turbine engine generating hot combustion gas flow, having a substrate having a hot surface facing the hot combustion gas and a cooling surface facing a cooling fluid flow, and a film hole extending through the substrate and having an inlet provided on the cooling surface, an outlet provided on the hot surface, and a passage connecting the inlet and the outlet, wherein the passage comprises an inlet portion including the inlet and defining an inlet portion centerline, and an outlet portion including the outlet and defining an outlet portion centerline, and wherein the outlet portion centerline intersects the inlet portion centerline at a point and forms a first angle relative to the inlet portion centerline about an axis passing through the point and perpendicular to a plane defined by the hot surface.

### BRIEF DESCRIPTION OF THE DRAWINGS

In the drawings:
FIG. 1 is a schematic, sectional view through a film hole of an engine component according to the prior art.
FIG. 2 is a top view of the hot surface of the prior art engine component from FIG. 1.
FIG. 3 is a schematic cross-sectional diagram of a gas turbine engine for an aircraft.
FIG. 4 is a side section view of a combustor and a high pressure turbine of the engine from FIG. 3.
FIG. 5 is a schematic, perspective view of an engine component having a film hole according to a first embodiment of the invention.
FIG. 6 is a top view of a hot surface of the engine component from FIG. 5.
FIG. 7 is a side view of the engine component from FIG. 5.

### DETAILED DESCRIPTION

The described embodiments of the present invention are directed to a film-cooled engine component, particularly in a gas turbine engine. For purposes of illustration, aspects of the present invention will be described with respect to an aircraft gas turbine engine. It will be understood, however, that the invention is not so limited and may have general applicability in non-aircraft applications, such as other mobile applications and non-mobile industrial, commercial, and residential applications.

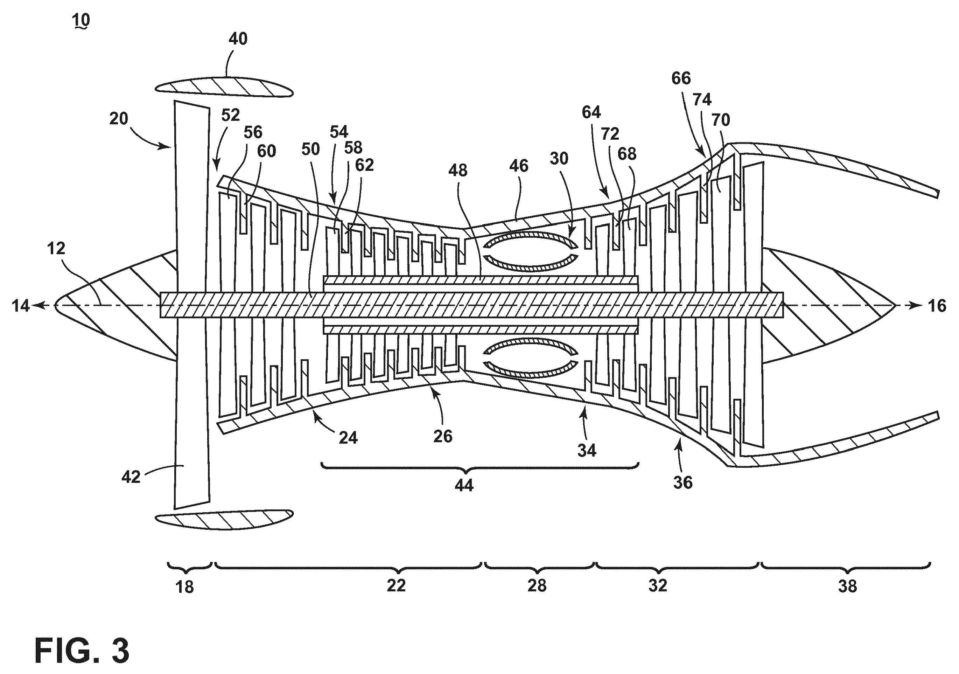

FIG. 3 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by a core casing 46 which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 may be provided in a ring and may extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 3 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 may be provided in a ring and may extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 3 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 may bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid may be, but is not limited to, fluid discharged from the LP compressor 24 or the HP compressor 26.

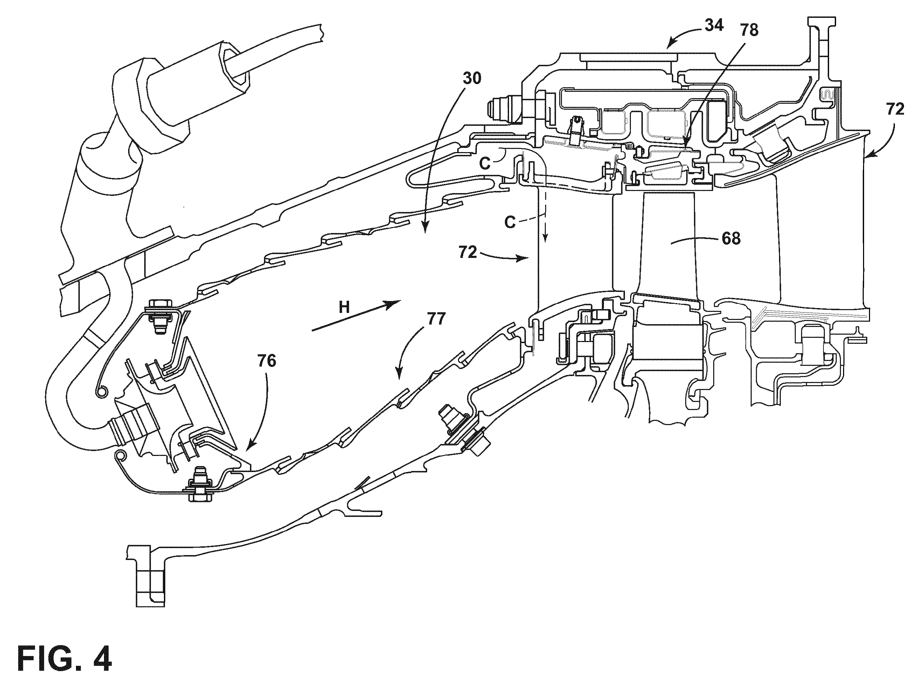

FIG. 4 is a side section view of the combustor 30 and HP turbine 34 of the engine 10 from FIG. 3. The combustor 30 includes a deflector 76 and a combustor liner 77. Adjacent to the turbine blade 68 of the turbine 34 in the axial direction are sets of radially-spaced, static turbine vanes 72, with adjacent vanes 72 forming nozzles therebetween. The nozzles turn combustion gas to better flow into the rotating blades so that the maximum energy may be extracted by the turbine 34. A cooling fluid flow C passes through the vanes 72 to cool the vanes 72 as hot combustion gas flow H passes along the exterior of the vanes 72. A shroud assembly 78 is adjacent to the rotating blade 68 to minimize flow loss in the turbine 34. Similar shroud assemblies can also be associated with the LP turbine 36, the LP compressor 24, or the HP compressor 26.

One or more of the engine components of the engine 10 includes a film-cooled substrate in which a film hole of an embodiment disclosed further herein may be provided. Some non-limiting examples of the engine component having a film-cooled substrate can include the blades 68, 70, vanes or nozzles 72, 74, combustor deflector 76, combustor liner 77, or shroud assembly 78, described in FIGS. 3-4. Other non-limiting examples where film cooling is used include turbine transition ducts and exhaust nozzles.

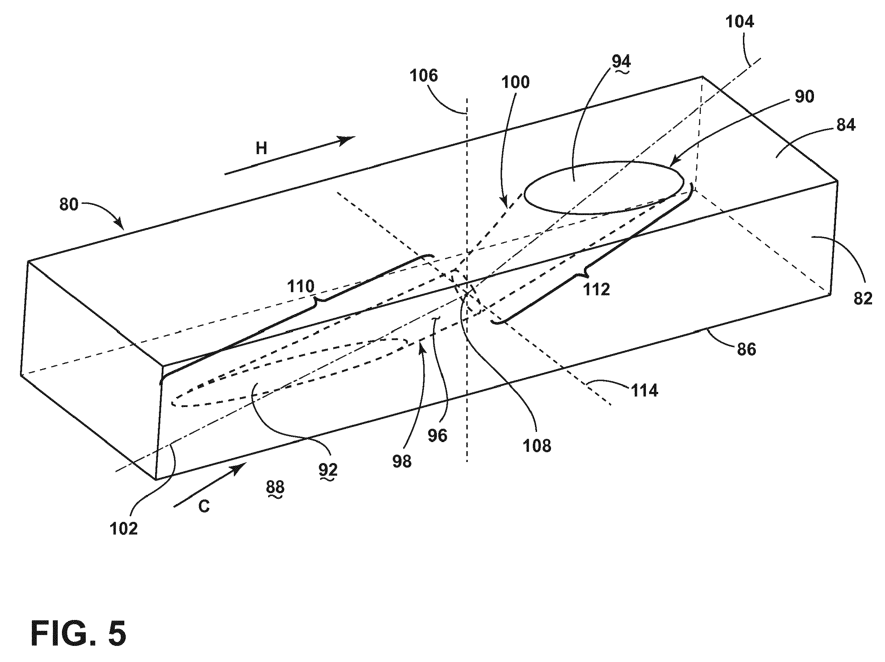

FIG. 5 is a schematic, perspective view showing a portion of an engine component 80 according to a first embodiment of the invention. The engine component 80 may be an engine component of the engine 10 from FIG. 3, and can be disposed in a flow of hot gas represented by arrow H. A cooling fluid flow, represented by arrow C may be supplied to cool the engine component. As discussed above with respect to FIGS. 3-4, in the context of a turbine engine, the cooling air can be ambient air supplied by the fan 20 which bypasses the engine core 44, fluid from the LP compressor 24, or fluid from the HP compressor 26.

The engine component 80 includes a substrate 82 having a hot surface 84 facing the hot combustion gas flow H and a cooling surface 86 facing the cooling fluid C. The substrate 82 may form a wall of the engine component 80; the wall may be an exterior or interior wall of the engine component 80. The first engine component 80 can define at least one interior cavity 88 comprising the cooling surface 86. The hot surface 84 may be an exterior surface of the engine component 80. In the case of a gas turbine engine, the hot surface 84 may be exposed to gases having temperatures in the range of 1000 °C to 2000 °C. Suitable materials for the substrate 82 include, but are not limited to, steel, refractory metals such as titanium, or superalloys based on nickel, cobalt, or iron, and ceramic matrix composites. The superalloys can include those in equi-axed, directionally solidified, and single crystal structures.

The engine component 80 further includes one or more film hole(s) 90 extending through the substrate 82 that provide fluid communication between the interior cavity 88 and the hot surface 84 of the engine component 80. During operation, the cooling fluid flow C is supplied to the interior cavity 88 and out of the film hole 90 to create a thin layer or film of cool air on the hot surface 84, protecting it from the hot combustion gas flow H. While only one film hole 90 is shown in FIG. 5, it is understood that the engine component 80 may be provided with multiple film holes 90, which may be arranged in any desired configuration on the engine component 80.

The film hole 90 can have an inlet 92 provided on the cooling surface 86 of the substrate 82, an outlet 94 provided on the hot surface 84, and a passage 96 connecting the inlet 92 and the outlet 94. Cooling fluid flow C enters the film hole 90 at the inlet 92 and passes through the passage 96 before exiting the film hole 90 at the outlet 94.

The passage 96 can include a first portion 98 and a second portion 100 that is downstream of the first portion 98 with respect to the direction of cooling fluid flow C through the passage 96. Each portion 98, 100 of the passage can define a distinct centerline 102, 104, which is the longitudinal axis which passes through the geometric center of the cross-sectional area of the portion 98, 100. As used herein with respect to the film hole 90, the term "axial direction" and variants thereof refer to the direction of cooling fluid flow C along the centerlines 102, 104 from the cooling surface 86 to the hot surface 84, and the term "radial direction" and variants thereof refer to the direction orthogonal to the centerlines 102, 104. As illustrated herein, the centerlines 102, 104 are linear; in other embodiments the centerlines 102, 104 may be non-linear or curved, depending on the shape of the film hole 90.

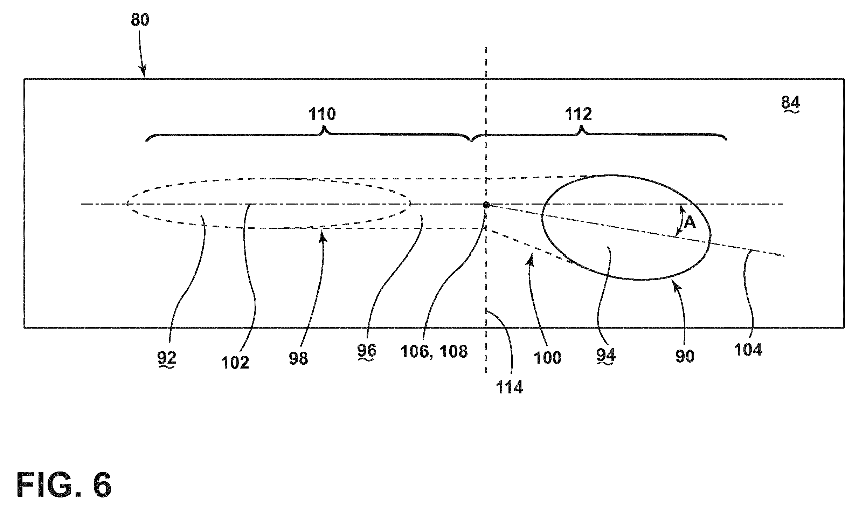

With additional reference to FIG. 6, which is a top view of the hot surface 84 of the engine component 80 from FIG. 5, the second portion 100 can be rotated relative to the first portion 98, such that the second centerline 104 is non-collinear with the first centerline 102 when viewed from the hot surface 84. The second centerline 104 can form a first angle A relative to the first centerline 102. In the illustrated embodiment, the first angle A can be determined about an axis 106 perpendicular to a plane defined by the hot surface 84. When viewed from the hot surface 84 as in FIG. 6, the axis 106 comes out of the page.

Many prior art film holes, including the film hole 200 shown in FIGS. 1-2, lie along a single centerline or collinear centerlines when viewed from above. Here, because the second portion 100 is rotated out of the plane in which the first centerline 104 lies, the centerlines 102, 104 are non-collinear when viewed from the hot surface 84. The rotated second portion 100 provides a lateral change in direction for the cooling fluid flow C through the passage 96. One general benefit to this is the added degree of design freedom and/or flexibility. The inlet 92 and outlet 94 are no longer constrained to be on the same collinear axes. The inlet 92 can be placed as needed with respect to internal features or walls of the engine component 80, while still maintaining a desired beneficial location for the outlet 94.

The two centerlines 102, 104 can intersect at an intersection point 108. The intersection point 108 may lie within the passage 96 as illustrated herein. The axis 106 may pass through the intersection point 108, such that the vertex of the first angle A lies at the intersection point 108. In addition to passing through the intersection point 108, in some embodiments of the invention the axis 106 may further be perpendicular to both the hot and cooling surfaces 84, 86.

It is noted that, in any of the embodiments discussed herein, although the substrate 82 is schematically shown as being generally planar, it is understood that the substrate 82 may be curved for many engine components 80. However, the curvature of the substrate 82 may be slight in comparison to the size of the film hole 90, and so for the purposes of discussion and illustration, the substrate 82 is shown as planar. Whether the substrate 82 is planar or curved, the axis 106 may be perpendicular to a plane defined by the hot surface 84 in the localized area of the substrate 82 through which the axis 106 passes. Furthermore, whether the substrate 82 is planar or curved local to the film hole 90, the hot and cooling surfaces 84, 86 may be parallel to each other as shown herein, or may lie in non-parallel planes.

The first portion 98 can be inclined in a downstream direction of cooling fluid flow C through the passage 96 such that the first centerline 102 is non-orthogonal to the hot and cooling surfaces 84, 86. The second portion 100 can also be inclined in a downstream direction of cooling fluid flow C through the passage 96 such that the second centerline 104 is non-orthogonal to the hot and cooling surfaces 84, 86. Alternatively, either centerline 102, 104 may be orthogonal to one or both of the hot or cooling surfaces 84, 86.

The first and second portions 98, 100 may have a circular or non-circular cross-sectional shape, where the cross-sectional shape is defined radially relative to the centerline 102, 104, respectively. Non-circular cross-sections may include, but not are limited to, rectangular, elliptical, trapezoidal, or other irregular shapes. Furthermore, the cross-sectional shape of the first and second portions 98, 100 may remain substantially constant long the centerline 102, 104, respectively, or may vary. For example, the first and second portions 98, 100 may converge or diverge from the centerline 102, 104, respectively, along the axial direction.

In the embodiment illustrated, the first portion 98 can be an inlet portion of the passage 96, such that the first portion 98 includes the inlet 92. The second portion 100 can be an outlet portion of the passage 96, such that the second portion 100 includes the outlet 94 of the passage 96. The inlet portion 98 can extend from the inlet 92 to the intersection point 108, and the outlet portion 100 can extend from the intersection point 108 to the outlet 94.

More specifically, in the illustrated embodiment, the first portion 98 is defined by a metering section 110 of the passage 96 for metering of the mass flow rate of the cooling fluid flow C, and the second portion 100 is defined by a diffusing section 112 in which the cooling fluid C may expand to form a wider cooling film. The diffusing section 112 may be in serial flow communication with the metering section 110. The metering section 110 can be provided at or near the inlet 92, while the diffusing section 112 can be defined at or near the outlet 94.

The metering section 110 is a portion of the passage 96 with the smallest cross-sectional area perpendicular to the direction of cooling fluid flow C through the passage 96. The metering section 110 may be a discrete location at which the passage 96 has the smallest cross-sectional area, or an elongated section of the passage 96.

An inlet to the metering section 110 communicates with the inlet 92 to the passage 96 and receives the cooling fluid flow C therefrom; in some embodiments of the invention, including the embodiment of FIG. 5, the inlet to the metering section 110 may further be coincident with the inlet 92 to the passage 96. An outlet of the diffusing section 112 is coincident with the outlet 94 of the passage 96. An outlet of the metering section 110 is coincident with an inlet to the diffusing section 112, defines a transition where the cooling fluid flow C may begin to expand.

The intersection point 108 of the two centerlines 102, 104 can lie at the transition between the metering section 110 and the diffusing section 112. In the illustrated embodiment, the metering section 110 is an elongated section of the passage 96, and the intersection point 108 lies at a distal or downstream end of the metering section 110.

The overall shape of the second portion 100 shown in FIG. 5 is substantially similar conical in shape, such that, in the axial direction, the diffusing section 100 generally diverges from the second centerline 104 but has a substantially circular cross-section perpendicular to the second centerline 104. Alternatively, the second portion 100 may have a substantially elliptical or rectilinear cross-section.

In operation, cooling fluid flow C enters the film hole 90 through the inlet 92 and passes through the metering section 98, turns at the intersection point 108, and passes through the diffusing section 100 before exiting the film hole 90 at the outlet 94 along the hot surface 84. The first angle A can represent a lateral change in the general direction of cooling fluid flow C though the passage 96. The first angle A can be the minimum angle between the first centerline 102 and the second centerline 104, such that it represents the magnitude or absolute value of the lateral change in direction, regardless of the direction in which the second portion 100 is rotated relative to the first portion 98, i.e. whether the second portion 100 is rotated up or down, relative to the view shown in FIG. 6, about the axis 106.

In one example, the first angle A can be acute. More specifically, the first angle A can be greater than 0 and less than 90 degrees. Still more specifically, the first angle A can range from 0 to 45 degrees. An acute angle A may lower the potential for material damage when manufacturing the film hole 90 and also lower the effects of manufacturing tolerances on cooling performance. Higher angles may also decrease the hole discharge coefficients such that the cooling fluid flow rate through the film hole decreases. In other embodiments of the invention, the first angle A may be obtuse, i.e. greater than 90 degrees.

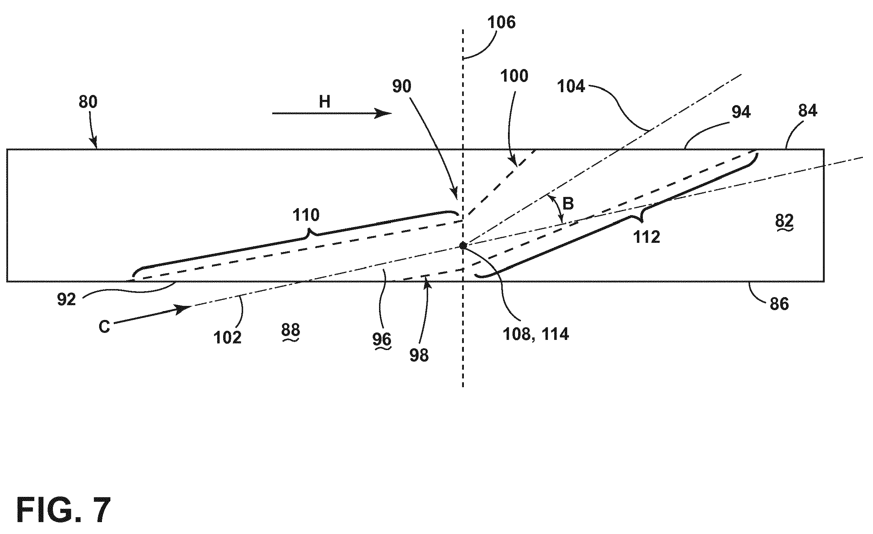

FIG. 7 is a side view of the engine component 80, in which the film hole 90 is shown in dotted line. When viewed from a plane orthogonal to the hot surface 84, the second centerline 104 can form a second angle B relative to the first centerline 102. In the illustrated embodiment, the second angle B can be determined about an axis 114 perpendicular to the axis 106. The axis 114 may thus be parallel to the plane defined by the hot surface 84. The axis 114 may pass through the intersection point 108, such that the vertex of the second angle B lies at the intersection point 108.

The second angle B can represent a longitudinal change in the general direction of cooling fluid flow C through the passage 96. The second angle B can be the minimum angle between the first centerline 102 and the second centerline 104, such that it represents the magnitude or absolute value of the longitudinal change in direction, regardless of the direction in which the second portion 100 is rotated relative to the first portion 98, i.e. whether the second portion 100 is rotated up or down, relative to the view shown in FIG. 7, about the axis 114.

In one example, the second angle B can be acute. More specifically, the second angle B can be greater than 0 and less than 90 degrees. Still more specifically, the second angle B can range from 0 to 25 degrees. In other embodiments of the invention, the second angle B may be obtuse, i.e. greater than 90 degrees.

It is noted that for many prior art film holes, including the film hole shown in FIGS. 1-2, the film hole lies along one or more centerlines which can be viewed in a cross-sectional plane. Here, because the second portion 100 is rotated out of plane with the first portion 98, the centerlines 102, 104 of the film hole 90 cannot be viewed in a single cross-sectional view orthogonal to the hot surface 84. However, both centerlines 102, 104 can be viewed from a plane orthogonal to the hot surface 84 from outside the film hole 90.

Embodiments of the present invention may be combined with shaping or contouring of the metering section and/or diffusing section of the film hole 90. Embodiments of the present invention may also be applied to film holes without a diffusing section. Embodiments of the present invention may also apply to slot-type film cooling, in which case the outlet 94 is provided within a slot on the hot surface 84. Further, in any of the above embodiments, a coating can be applied to the hot surface 84 of the substrate 82. Some non-limiting examples of coatings include a thermal barrier coating, an oxidation protection coating, or combinations thereof.

The various embodiments of devices and methods related to the invention disclosed herein provide improved cooling for engine structures, particularly in a turbine component having film holes. One advantage that may be realized in the practice of some embodiments of the described systems is that the film hole has includes portions that are angled relative to each other when viewed from the hot surface. Previous shaped diffuser film holes have significant limitations when applied in compound angle orientations. By allowing the axes of differ portion of the film hole to be different, particularly the axes of the inlet and outlet portions, the outlet portion can be rotated from the inlet portion. The multi-axis film hole provides the ability to rotate the outlet portion as needed for maximum benefit, such as increasing film cooling effectiveness in highly curved airfoil regions, allowing film holes to be preferentially positioned within cooling passages without sacrificing the benefits of full shaping and coverage, and/or allowing decoupling of the flow entry and exit effects due to the relative orientation of the inlet or outlet of the film hole to the cooling fluid or hot combustion gas flow direction local to the film hole, respectively.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An engine component for a gas turbine engine, the gas turbine engine generating hot combustion gas flow, comprising:
   a substrate having a hot surface facing the hot combustion gas flow and a cooling surface facing a cooling fluid flow; and
   a film hole extending through the substrate and having an inlet provided on the cooling surface, an outlet provided on the hot surface, and a passage connecting the inlet and the outlet;
   wherein the passage comprises an inlet portion defining an inlet portion centerline and an outlet portion defining an outlet portion centerline, which forms a first angle relative to the inlet portion centerline such that the outlet portion centerline is non-collinear with the inlet portion centerline when viewed from the hot surface.
2. The engine component of clause 1, wherein the outlet portion centerline forms a second angle relative to the inlet portion centerline when viewed from a plane orthogonal to the hot surface.
3. The engine component of any preceding clause, wherein at least one of the first and second angles are acute.
4. The engine component of any preceding clause, wherein both of the first and second angles are acute.
5. The engine component of any preceding clause, wherein the first angle is about an axis perpendicular to a plane defined by the hot surface.
6. The engine component of any preceding clause, wherein the axis passes through an intersection of the inlet portion centerline and the outlet portion centerline.
7. The engine component of any preceding clause, wherein the passage comprises a metering section defining the inlet portion and a diffusing section defining the outlet portion.
8. The engine component of any preceding clause, wherein the metering section includes the inlet and the diffusing section includes the outlet.
9. The engine component of any preceding clause, wherein the inlet portion centerline and the outlet portion centerline are linear.
10. An engine component for a gas turbine engine, the gas turbine engine generating hot combustion gas flow, comprising:
   a substrate having a hot surface facing the hot combustion gas flow and a cooling surface facing a cooling fluid flow; and
   a film hole extending through the substrate and having an inlet provided on the cooling surface, an outlet provided on the hot surface, and a passage connecting the inlet and the outlet;
   wherein the passage comprises:
      a first portion defining a first centerline; and
      a second portion, located downstream of the first portion relative to the direction of the cooling fluid flow through the passage, defining a second centerline;
      wherein the second centerline forms a first angle relative to the first centerline about an axis perpendicular to a plane defined by the hot surface.
11. The engine component of any preceding clause, wherein the second centerline forms a second angle relative to the first centerline when viewed from a plane orthogonal to the hot surface.
12. The engine component of any preceding clause, wherein at least one of the first and second angles are acute.
13. The engine component of any preceding clause, wherein both of the first and second angles are acute.
14. The engine component of any preceding clause, wherein the axis passes through an intersection of the first centerline and the second centerline.
15. The engine component of any preceding clause, wherein the passage comprises a metering section defining the first portion and a diffusing section defining the second portion.
16. The engine component of any preceding clause, wherein the metering section includes the inlet and the diffusing section includes the outlet.
17. The engine component of any preceding clause, wherein the first centerline and the second centerline are linear.
18. An engine component for a gas turbine engine, the gas turbine engine generating hot combustion gas flow, comprising:
   a substrate having a hot surface facing the hot combustion gas and a cooling surface facing a cooling fluid flow; and
   a film hole extending through the substrate and having an inlet provided on the cooling surface, an outlet provided on the hot surface, and a passage connecting the inlet and the outlet;
   wherein the passage comprises an inlet portion including the inlet and defining an inlet portion centerline, and an outlet portion including the outlet and defining an outlet portion centerline; and
   wherein the outlet portion centerline intersects the inlet portion centerline at a point and forms a first angle relative to the inlet portion centerline about an axis passing through the point and perpendicular to a plane defined by the hot surface.
19. The engine component of any preceding clause, wherein the outlet portion centerline forms a second angle relative to the inlet portion centerline when viewed from a plane orthogonal to the hot surface.
20. The engine component of any preceding clause, wherein the passage comprises a metering section defining the inlet portion and a diffusing section defining the outlet portion.

## Claims

1. An engine component (80) for a gas turbine engine, the gas turbine engine generating hot combustion gas flow, comprising:
a substrate (82) having a hot surface (84) facing the hot combustion gas flow and a cooling surface (86) facing a cooling fluid flow; and
a film hole (90) extending through the substrate (82) and having an inlet (92) provided on the cooling surface (86), an outlet (94) provided on the hot surface (84), and a passage (96) connecting the inlet (92) and the outlet (94);
wherein the passage (96) comprises an inlet portion (98) defining an inlet portion centerline (102) and an outlet portion (100) defining an outlet portion centerline (104), which forms a first angle relative to the inlet portion centerline (102) such that the outlet portion centerline (104) is non-collinear with the inlet portion centerline (102) when viewed from the hot surface (84).

2. The engine component (80) of claim 1, wherein the outlet portion centerline (104) forms a second angle relative to the inlet portion centerline (102) when viewed from a plane orthogonal to the hot surface (84).

3. The engine component (80) of claim 2, wherein at least one of the first and second angles are acute.

4. The engine component (80) of claim 3, wherein both of the first and second angles are acute.

5. The engine component (80) of any of claims 2 to 4, wherein the first angle is about an axis (106) perpendicular to a plane defined by the hot surface (84).

6. The engine component (80) of claim 5, wherein the axis (106) passes through an intersection (108) of the inlet portion centerline (102) and the outlet portion centerline (104).

7. The engine component (80) of any preceding claim, wherein the passage (96) comprises a metering section (110) defining the inlet portion (98) and a diffusing section (112) defining the outlet portion (100).

8. The engine component (80) of claim 7, wherein the metering section (110) includes the inlet (92) and the diffusing section (112) includes the outlet (94).

9. The engine component (80) of any preceding claim, wherein the inlet portion centerline (102) and the outlet portion centerline (104) are linear.

10. The engine component (80) of any preceding claim, wherein the outlet portion (100) is located downstream of the inlet portion (98) relative to the direction of the cooling fluid flow through the passage (96); and
wherein the outlet portion centerline (104) forms the first angle relative to the inlet portion centerline (102) about an axis (106) perpendicular to a plane defined by the hot surface (84).

11. The engine component (80) of any preceding claim, wherein the outlet portion centerline (104) intersects the inlet portion centerline (102) at a point and forms the first angle relative to the inlet portion centerline (102) about an axis passing through the point and perpendicular to a plane defined by the hot surface (84).
